Europäisches Patentamt

European Patent Office

Office européen des brevets

(19)

(11) Publication number: **0 043 266**
**B1**

(12)     **EUROPEAN PATENT SPECIFICATION**

(45) Date of publication of patent specification: **20.02.85**

(51) Int. Cl.⁴: **F 16 H 1/06,** B 60 K 7/00

(21) Application number: **81302918.8**

(22) Date of filing: **26.06.81**

(54) **A geared hub.**

(30) Priority: **26.06.80 CA 354937**

(43) Date of publication of application:
**06.01.82 Bulletin 82/01**

(45) Publication of the grant of the patent:
**20.02.85 Bulletin 85/08**

(84) Designated Contracting States:
**DE FR GB IT**

(56) References cited:
**DE-B-1 455 657**
**FR-A-1 381 151**
**GB-A-1 227 236**
**US-A-1 512 232**
**US-A-3 521 504**
**US-A-3 798 983**
**US-A-3 864 990**

(73) Proprietor: **GEARCO LIMITED**
**Goderich Ontario, N7A 2L1 (CA)**

(72) Inventor: **Jerry, James Henry**
**Goderich**
**Ontario N7A 2L1 (CA)**
Inventor: **Dickie, Ira**
**Goderich**
**Ontario N7A 2L1 (CA)**

(74) Representative: **Fisher, Bernard et al**
**Raworth, Moss & Cook 36 Sydenham Road**
**Croydon Surrey CR0 2EF (GB)**

Courier Press, Leamington Spa, England.

## Description

The present invention relates to geared hubs for driving wheels of a vehicle and particularly, to a hub design which may be used on any wheel of a vehicle.

It has been the common practice in four wheel drive type vehicles to use a central gear box, the output of which is fed directly to the individual driven wheels of a vehicle. However, in some applications, particularly where high ground clearance is required, it is desirable to have the drive shaft of each wheel come in a position higher than the wheel spindle which causes problems with respect to driving the wheel. This problem is overcome by having the drive shaft connected to a pinion gear which is in mesh with an output gear normally splined to the wheel spindle. Due to the use of two gears at the wheel to allow for increased ground clearance, it is possible to reduce the size and gear reduction in the central gear box as some of this gearing is now taking place at the wheel. Although, a geared hub has proved more than satisfactory, in the field, it does introduce problems particularly with respect to manufacturing of the device as well as the increased cost necessary to produce these units. The pre-characterising part of claim 1 discloses such a geared hub.

It has been the practice to manufacture a two piece gear hub to allow assembly of the gears within the casing and to allow casting of the various housing components. With geared hubs of this type, a high degree of machining is required to assure proper alignment of the casing components upon assembly. Particularly, the alignment of the wheel bearing apertures provided in each section of the housing for receiving wheel spindle has been difficult. Furthermore, these housings are normally vertically split to provide sufficient strength within the geared hub to withstand the forces exerted on the hub as the vehicle is driven over rough terrain. As can readily be appreciated, sealing of vertically split housings is difficult and oil leakage may become a problem. Furthermore, with vertically split housings, it is difficult to utilize the strength of both components to withstand the force exerted on the casing by a vehicle and therefore, one piece of the housing must be made substantially stronger to withstand these forces.

Assembly of split housings is also difficult, as care must be taken to assure the accurately machined abutting flanges of the housing do not warp due to improper bolt tightening procedures. Warping of these surfaces will result in oil leakage and normally cannot be corrected by reassembling the hub. Any misalignment of the plunger will result in excessive bearing wear and excessive gear wear which may or may not be detected when the unit is assembled. Severe misalignment can cause gear tooth breakage and may be detected due to high noise level when the unit is operated.

It can be appreciated that geared hubs are used for all terrain type vehicles and particularly military vehicles. Because of this application, the units must be reliable, inherently strong, require low maintenance and be relatively inexpensive to produce.

It is known from US—A—3521504 to provide a gear housing as a single hollow casting in which a driving shaft carrying a worm and a second gear shaft carrying a worm wheel are mounted in bores perpendicular to each other. The driving shaft and the gear shaft and their associated worms are pressed into their associated bores. Such an arrangement is not suitable for a geared hub for driving the wheel of a vehicle.

It is known from FR—A—1381151 to provide a gear box and a differential in which the gear box is formed as a one-piece housing. In this case, both the input or drive shaft carrying the associated gear wheels and the output shaft carrying its associated gear wheels are inserted through a common access aperture into a chamber in the housing. Each shaft, after passing through the common access aperture has to be extended through a supporting aperture in one of two opposed walls in order to get it into the chamber and then manoeuvred back through and into an aligned aperture in the other of the two opposed walls. Such a one-piece housing is disclosed in the pre-characterising part of claim 11.

In neither of the prior art documents referred to is any provision made for separate access to the chamber for an output gear so that such output gear can be mounted on the output shaft as the latter is passed into the chamber.

According to the present invention as claimed in claim 1 there is provided a geared hub for driving the wheel of a vehicle comprising a housing having an elongate gear chamber, a wheel spindle extending through said chamber and generally perpendicular to the length thereof, an output gear and an input pinion, said output gear driving said wheel spindle and in mesh with said input pinion characterised in that said housing is a one-piece casting having first access means for receiving and supporting said wheel spindle, second access means for receiving an input shaft associated with said input pinion, and third access means in a sidewall of said housing for inserting said output gear into the gear chamber, said first and second access means being in the endwalls of said gear chamber, the end walls being perpendicular to the axis of the wheel spindle and said side wall being situated therebetween, said one-piece housing including means for mounting said housing to a vehicle.

The invention as claimed in claim 11 also provides a one-piece housing for a gearing having an input pinion and a parallel output shaft carrying an output gear to transmit drive from the input pinion to the output shaft, the housing having at least a first aperture in one of two opposed walls of the housing to support the input pinion, a pair of aligned apertures in said opposed walls to support the output shaft and a further aperture in another wall of the housing to allow access to an elongate gear chamber within the housing characterised in that the housing is for use with a geared hub for driving the wheel of a vehicle, the output shaft is the wheel spindle said first aperture provides access to the chamber for the input pinion, at least one of the pair of aligned apertures provides access to the chamber for the wheel spindle and the further aperture allows access to the chamber for the output gear to allow it to be inserted into the chamber and mounted within the chamber on the wheel spindle as the chamber is accessed by the wheel spindle through said at least one of the pair of aligned apertures, a cover plate is provided for the further aperture and means is provided for mounting the housing on a vehicle whereby forces exerted on the wheel spindle are transmitted through the housing to the vehicle.

Preferred embodiments of the invention are shown in the drawings wherein:

Figure 1 is an exploded perspective view of the complete gear hub assembly

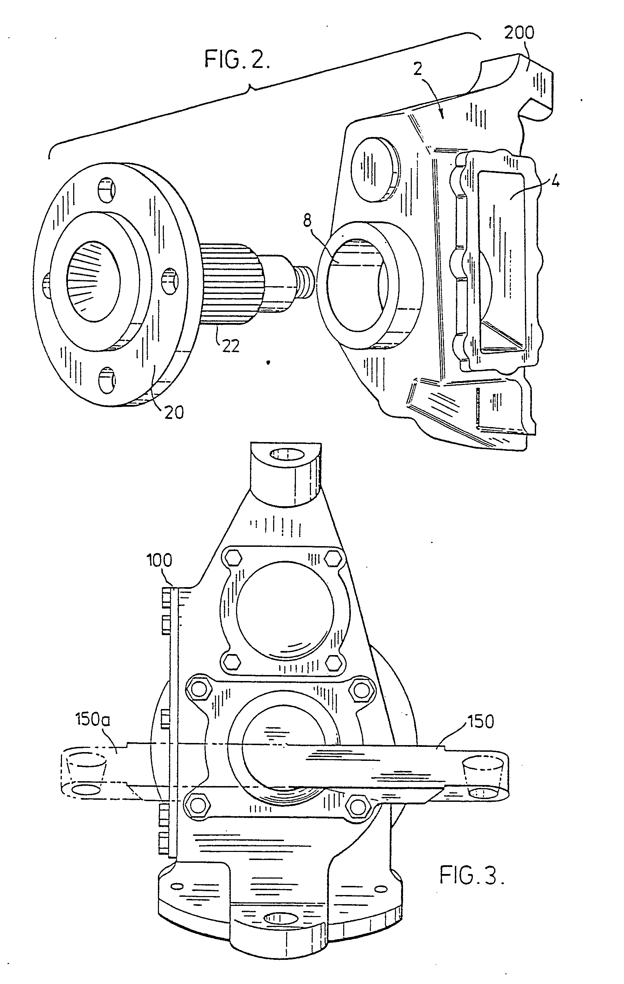

Figure 2 is a perspective view with the wheel spindle withdrawn from the geared hub,

Figure 3 is an end view of the geared hub illustrating the securement of the radius arm, and

Figure 4 is a vertical section through the geared hub.

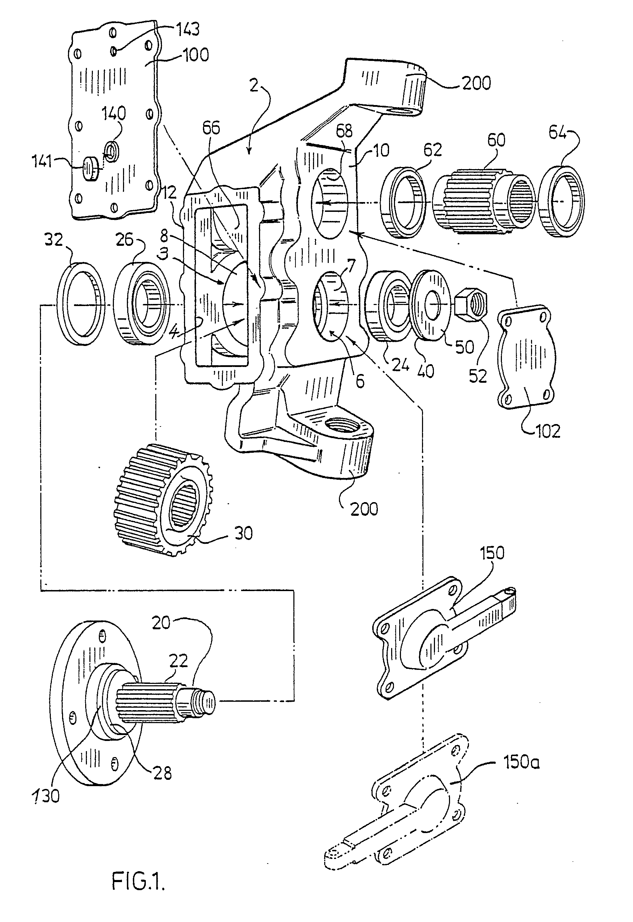

The device as shown in Figure 1 is centered about a one piece cast housing 2 which includes an elongated gear chamber 3. First access means generally shown as 6 includes two apertures 7 and 8 provided in the end walls 10 and 12 of the casing. This first access means is roughly formed during the casting operation of the geared housing and apertures 7 and 8 can be precisely machined thereby avoiding alignment difficulties encountered in the assembly of split case housings. For example, it would be quite simple to program a numerical control machine to automatically drill apertures 7 and 8, thereby assuring accurate alignment. The first access means allows a wheel spindle 20 to pass through the housing and through an output gear 30 which has been placed within the gear chamber and aligned with the shaft 22 of a wheel spindle. Bearing 24 and 26 are provided either end of the wheel spindle and engage apertures 7 and 8 respectively. Bearing 26 is sized to easily slide over the splined shaft portion 22 and engage surface 28 provided on the wheel spindle. Stepped portion 130 of the wheel spindle engages a sealing ring 32 to seal aperture 8 of the gear chamber. Snap ring 40 is provided to cooperate with shaft 22 and accurately position output gear 30 on the shaft. Bearing 24 cooperates with aperture 7 which has a stepped cross section whereby, washer 50 and nut 52 may be used to adjust the end play of the wheel spindle with respect to the bearings.

An input pinion 60 is secured within the casing by bearings 62 and 64. Bearing 62 engages a recess 66 provided in one end wall of the housing and bearing 64 engages an aperture 68 provided in the opposite end wall of the housing. As shown, input pinion 60 is inserted directly through aperture 68 which forms a second access means in one end wall of the casing. A permanent cover plate 100 is sized to close a rectangular opening 4 provided in a sidewall of the casing. A cover plate 102 is sized to close aperture 68 however, this will only be necessary if the unit is to be stored or shipped to another location. This cover plate would be removed when the splined input shaft is placed within the input pinion 60.

A radius arm 150 is provided to cover and seal aperture 7 and when it is not possible, due to the particular vehicle construction, to have symmetrical radius arms, two radius arms may be provided (150 and 150a), one for either side of the vehicle. Where the geared hub is to be used for a rear wheel, the radius arm may merely be secured to the frame in a manner to maintain alignment of the wheel. At the top and bottom of the geared hub mounting brackets 200 are provided which form part of the king pin mounting arrangement used to pivotally secure the hub to a vehicle. These mounting brackets transmit the force exerted by the wheel on the casing to the frame of the vehicle.

In assembling the structure, bearings 62, 26, and 24 are positioned within the gear chamber and input pinion 60 and bearing 64 are then secured in place. The output gear may then be inserted within the gearchamber through rectangular opening 4 and positioned to align with the wheel spindle 20. It can thus be appreciated, that this output gear 30 is splined and carried on the wheel spindle which is supported within the case by bearings 26 and 24. All apertures 7, 8 and 68 are subsequently sealed and the wheel spindle adjusted by nut 52 such that the end play on the wheel spindle is within acceptable tolerances, less than 0,178 mm seven thousandths of an inch). Cover plate 100 and radius arm 150 are then installed and sufficient oil for lubrication of the system is placed in the gear cavity through aperture 140 provided in the cover plate. This aperture is subsequently sealed by plug 141. A vent aperture 143 is provided within cover plate 100 and a vent line (not shown) may be inserted to assure water does not enter the gear housing. After assembly of the unit, various quality control checks such as backlash can be conducted.

It can thus be appreciated that the hub according to the present invention when completed, forms a finished product with no adjustment being required when the unit is installed on a vehicle. However, oil is normally added during installation of the unit on a vehicle.

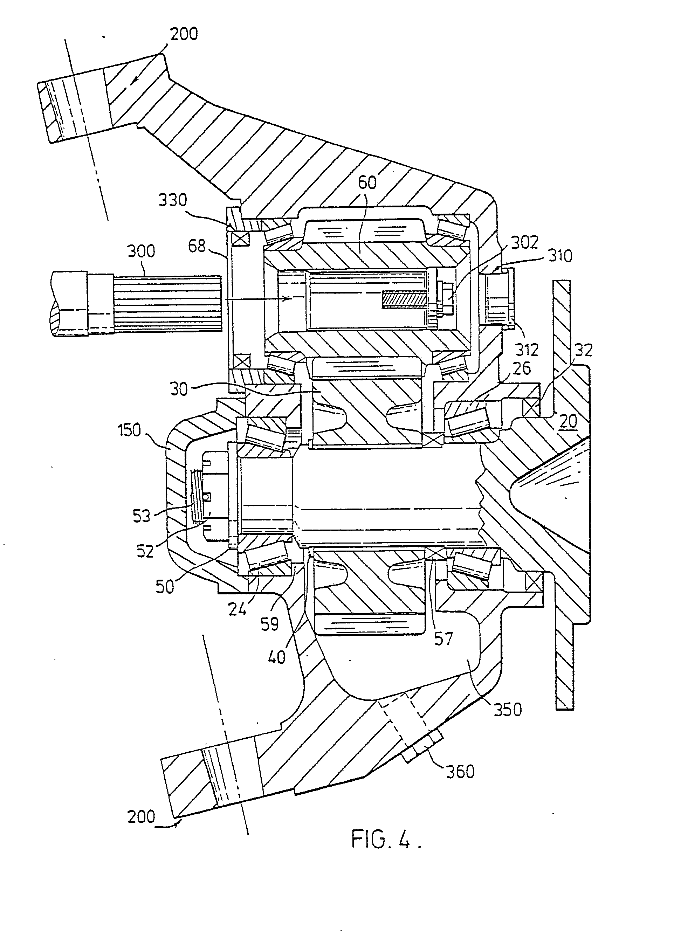

The installation of the unit on a vehicle is simplified as shown in Figure 4 where an input shaft 300 is merely inserted within the splined input pinion 60 and maintained in this position by bolt 302. A small aperture 310 is provided within the casing to allow access to the head of a bolt 302 and a cup 312 is provided to seal this aperture when the input shaft has been properly secured. It can thus be appreciated that power is transmitted from the main transmission through input shaft 300 to the input pinion 60 to output gear 30 which drives wheel spindle 20. A small oil sump 350 is clearly shown in the cross section and is positioned essentially below the rectangular aperture 4. Because of this the unit is not as vulnerable to oil leaks as two piece housings. A magnetic drain plug 360 is shown at the base of the sump for draining thereof.

As shown in Figure 4, a seal 32 is provided about the wheel spindle 20 and spacer 57 in combination with snap ring 40 positively locate output gear 30. With radius arm 150 removed, nut 52 may be tightened on shafts 53 such that the end play of the wheel spindle can be set. The nut is then locked in position by codder pin 147. With respect to the input shaft 300, a combination gasket and sealing ring 330 is provided at the mouth of aperture 68 for engaging input shaft. As can be appreciated, the output gear 30 contacts oil within the sump 350 thereby, circulating oil throughout the gear chamber.

Furthermore, due to the particular arrangement, the input shaft 300 is positioned above the wheel spindle thereby, allowing the radius arm to be located higher on the housing and in this case, adapted to cover the wheel spindle. In direct drive systems, the radius arm would be located below the wheel spindle resulting in reduced ground clearance than the present arrangement.

Forces exerted on the wheel spindle are transmitted to the mounting means 200 by both end portions of the gear casing and therefore, these end walls cooperate to provide sufficient strength to withstand these forces. The integral casing in combination with the placement of apertures within the arrangement provides an inherently strong structure which utilizes the strength of all components to satisfy the necessary design restraints while still providing a compact gear hub.

The one piece housing also allows accurate machining of the apertures for the wheel spindle and the input shaft without requiring excess machining to assure alignment of these apertures. The one piece structure also allows quality control tests to be conducted with respect to the alignment of the various apertures prior to the assembly operation, thereby allowing unacceptable housings to be rejected without experiencing the additional cost incurred in assembling the hub. This results in a hub which has low manufacturing costs in combination with high accuracy with respect to tolerances. The resulting unit is inherently strong and suitable to be manufactured as a finished product that can be easily installed by the end user. All hub adjustments are made prior to the installation of an input shaft and therefore, the quality control of the geared hub can be accurately monitored within the manufacturing plant. Furthermore, the one piece housing results in low maintenance with also a low probability of oil leaks commonly found in prior art structures.

Because the hub is of a universal design, it may be used on all four wheels of a vehicle with only the radius arm requiring replacement should a non-symmetrical steering arm be required. In any event, the universal design of the hub allows reduction in warehousing expense for both the producer and the end users who must warehouse components for future demand as well as replacement. This is particularly advantageous for military applications, due to the large number of vehicles used and the requirement to have replacement components immediately available. Furthermore the universal hub design allows old equipment to be cannibalized efficiently. Where non-symmetrical steering arms are required to complete both left and right hub assemblies, only the radius arms require duplicative warehousing.

Thus it can be seen that this invention provides a very compact, strong geared hub which due to its unique arrangement allows the hub to be utilized on all wheels of a vehicle when used in combination with a radius arm. It can readily be appreciated that if a breakdown should occur in the field, it will usually occur to the geared hub or to the radius arm and thus it is desirable that each of these components be made separately as opposed to being integral as repair will only require replacement of one of these components.

The hub design also uses an appropriate two to one gear reduction at the hub, thereby reducing the size and strength of the components upstream. For example, inboard brakes may be used of smaller capacity, lighter drive shafts may be used and the centre axle pod may be smaller.

**Claims**

1. A geared hub for driving the wheel of a vehicle comprising a housing (2) having an elongate gear chamber (3), a wheel spindle (20) extending through said chamber (3) and generally perpendicular to the length thereof, an output gear (30) and an input pinion (60), said output gear (30) driving said wheel spindle (20) and in mesh with said input pinion (60) characterised in that said housing (2) is one-piece casting having first access means (6) for receiving and supporting said wheel spindle (20), second access means (68) for receiving an input shaft associated with said input pinion, and third access means (4) in a sidewall of said housing for inserting said output gear (30) into the gear chamber, said first (6) and second access means (68) being in the endwalls (10, 12) of said gear chamber (3), the endwalls (10, 12) being perpendicular to the axis of the wheel spindle (20) and said sidewall being situated therebetween, said one-piece housing including means (150, 200) for mounting said housing to a vehicle.

2. A geared hub as claimed in claim 1 characterised in that said mounting means (150, 200) includes a radius arm (150) for controlling the position of said geared hub relative to a vehicle and two king-pin connection flanges (200) extending from the ends of said housing (2) with one located above and the other located below said gear chamber (3), said first and second access means (6, 68) being generally centrally located relative to said gear chamber (3) and said second access means (68) being located adjacent to said first access means (6).

3. A geared hub as claimed in claim 2 characterised in that said radius arm (150) is secured to said gear housing and sized to cover one end of said wheel spindle thereby forming a torque arm for forming part of the steering system of a vehicle or being connectable to the vehicle frame to maintain one position of said hub relative to the frame.

4. A geared hub as claimed in claim 1, 2 or 3 characterised in that said third acess means (4) is a generally rectangular opening.

5. A geared hub as claimed in claim 1, 2, 3 or 4 characterised in that said first access means (6) includes two circular aligned apertures (7, 8) for receiving wheel spindle bearings (24, 26) at either end of said one-piece housing.

6. A geared hub as claimed in claims 1, 2, 3, 4 or 5 wherein said second access means (68) includes two apertures (68, 310) one for receiving said input shaft (300) and the second aperture (310) allowing access to a device for securing said input shaft (300) within said input pinion (60).

7. A geared hub as claimed in any preceding claim characterised in that said wheel spindle (20) is splined through the centre of said output gear (30) and supported either side of said gear chamber by bearings (24, 26), said spindle including means (50, 52) at one end thereof for adjusting the end play of said spindle, said output gear (30) being at least partially located on said wheel spindle by a snap ring (40) associated with said wheel spindle (20)..

8. A geared hub as claimed in any preceding claim characterised in that said input pinion (60) is splined to receive said input shaft (300), said second access means (68) includes an access port generally aligned with said input gear (310) for securing said input shaft to said input gear adjacent the end of said input shaft (300) received in said input gear, said input pinion (60) and said output gear (30) providing an approximate 2 to 1 gear reduction.

9. A geared hub as claimed in any preceding claim characterised by an oil sump (350) at the bottom of said gear chamber below all of said access means (4, 6, 68).

10. A geared hub as claimed in any of claims 4 to 9, further characterised by a flat cover plate (100) for closing said rectangular opening (4) in said housing (2), said wheel spindle (20) and said input pinion (60) being bearingly supported in the endwalls (10, 12) of said housing (2).

11. A one-piece housing (2) for a gearing having an input pinion (60) and a parallel output shaft (20) carrying an output gear (30) to transmit drive from the input pinion (60) to the output shaft (20), the housing (2) having at least a first aperture (68) in one of two opposed walls (10, 12) of the housing (2) to support the input pinion (60), a pair of aligned apertures (7, 8) in said opposed walls (10, 12) to support the output shaft (20) and a further aperture (4) in another wall of the housing to allow access to an elongate gear chamber (3) within the housing (2) characterised in that the housing (2) is for use with a geared hub for driving the wheel of a vehicle, the output shaft is the wheel spindle (20) said first aperture (68) provides access to the chamber (3) for the input pinion (60), at least one of the pair of aligned apertures (7, 8) provides access to the chamber (3) for the wheel spindle (20) and the further aperture (4) allows access to the chamber (3) for the output gear (30) to allows it to be inserted into the chamber (3) and mounted within the chamber (3) on the wheel spindle (20) as the chamber is accessed by the wheel spindle (20) as the chamber is accessed by the wheel spindle (20) through said at least one (8) of the pair of aligned apertures (7, 8), a cover plate (100) is provided for the further aperture (4) and means (200) is provided for mounting the housing (2) on a vehicle whereby forces exerted on the wheel spindle (20) are transmitted through the housing (2) to the vehicle.

**Revendications**

1. Moyeu démultiplicateur destiné à entraîner la roue d'un véhicule, comprenant un carter (2) ayant une chambre à engrenages (3) de forme allongée, une fusée de roue (20) qui s'étend à travers ladite chambre (3) et est à peu près perpendiculaire à sa longueur, une roue dentée de sortie (30) et un pignon dentée (60), ladite roue dentée de sortie (13) entraînant ladite fusée de roue (20) et étant en prise avec ledit pignon d'entrée (60), caractérisé en ce que ledit carter (2) est une pièce coulée en une seule pièce présentant des premiers moyens d'accès (6) destinés à recevoir et supporter ladite fusée de roue (20); des deuxièmes moyens d'accès (8) destinés à recevoir un arbre d'entrée associé audit pignon d'entrée; et des troisièmes moyens d'accès (4) ménagés dans une paroi latérale dudit carter pour insérer ladite roue dentée de sortie (30) dans ladite chambre d'engrenages, lesdits premiers (6) et deuxièmes moyens d'accès (68) ménagés dans les parois d'extrémités (10, 12) de ladite chambre d'engrenages (3), les parois d'extrémité (10, 12) étant perpendiculaires à l'axe de la fusée de roue (20), ladite paroi latérale étant située entre elles, ledit carter en une seule pièce comprenant des moyens (150, 200) pour monter ledit carter sur un véhicule.

2. Moyeu démultiplicateur selon la revendication 1, caractérisé en ce que lesdits moyens de montage (150, 200) comprenant un bras radial (150) pour commander la position dudit moyeu démultiplicateur par rapport à un véhicule et deux joues (200) de liaison à un pivot, qui partent des extrémités dudit carter (2), l'une étant placée au-dessus et l'autre placée au-dessous de ladite chambre d'engrenages (3), lesdits premiers et deuxièmes moyens d'accès (6, 68) étant placés en une position à peu près centrale par rapport à ladite chambre d'engrenages (3) et lesdits deuxièmes moyens d'accès (68) étant placés adjacents auxdits premiers moyens d'accès (6).

3. Moyeu démultiplicateur selon la revendication 2, caractérisé en ce que ledit bras radial (150) est fixé audit carter d'engrenage et dimensionnné de manière à couvrir une extrémité de ladite fusée de roue, en formant ainsi un bras de couple pour former une partie du mécanisme de direction du véhicule, ou pouvant être relié au châssis du véhicule pour maintenir la position du moyeu par rapport au châssis.

4. Moyeu démultiplicateur selon la revendication 1, 2 ou 3, caractérisé en ce que lesdits troisièmes moyens d'accès (4) sont une ouverture de forme générale rectangulaire.

5. Moyeu démultiplicateur selon la revendication 1, 2, 3 ou 4, caractérisé en ce que lesdits premiers moyens d'accès (6) comprennent deux ouvertures circulaires alignées (7, 8) destinées à recevoir les paliers (24, 26) de la fusée de la roue respectivement aux deux extrémités dudit carter en une seule pièce.

6. Moyeu démultiplicateur selon l'une des revendications 1, 2, 3, 4 ou 5, caractérisé en ce que lesdits moyens d'accès comprennent deux ouvertures (68, 310), pour recevoir ledit arbre d'entrée (300) et la deuxième ouverture permettant d'accéder à un dispositif pour fixer ledit arbre d'entrée (300) dans ledit pignon d'entrée (60).

7. Moyeu démultiplicateur selon l'une des revendications précédentes, caractérisé en ce que ladite fusée de roue (20) est fixée par cannelure à travers le centre de ladite roue dentée de sortie (30) et supportée de part et d'autre de ladite chambre à engrenages par des paliers (24, 26), ladite fusée comprenant des moyens (50, 52) situés à l'une de ces extrémités pour régler le jeu en bout de ladite fusée, ladite roue dentée de sortie (30) étant au moins partiellement fixée en position sur ladite fusée de roue par une bague élastique (40) associée à ladite fusée de roue (20).

8. Moyeu démultiplicateur selon l'une des revendications précédentes, caractérisé en ce que ledit pignon d'entrée (60) est cannelé pour recevoir ledit arbre de sortie (300), lesdits deuxièmes moyens d'accès (68) comprennent un orifice d'accès à peu près aligné sur ladite roue dentée d'entrée (310) pour fixer ledit arbre d'entrée à ladite roue dentée d'entrée à proximité de l'extrémité dudit arbre d'entrée (300) qui est reçu par ladite roue dentée d'entrée, ledit pignon d'entrée (60) et ladite roue dentée de sortie (30) donnant une réduction d'engrenages d'environ 2 à 1.

9. Moyeu démultiplicateur selon l'une quelconque des revendications précédentes, caractérisé par un carter d'huile (350) prévu au bas de la chambre à engrenages au-dessous de tous lesdits moyens d'accès (4, 6, 68).

10. Moyeu démultiplicateur selon l'une quelconque des revendications 4 à 9, caractérisé en outre par une plaque de fermeture plane (100) destinée à fermer ladite ouverture rectangulaire (4) ménagée dans ledit carter (2), ladite fusée de roue (20) et ledit pignon d'entrée (60) étant supportés par des· paliers dans les parois d'extrémités (10, 12) dudit carter (2).

11. Carter en une seule pièce (2) pour un mécanisme à engrenages comprenant un pignon d'entrée (60) et un arbre de sortie parallèle (20) portant une roue dentée de sortie (30) pour transmettre le mouvement du pignon d'entrée (60) à l'arbre de sortie (20), le carter (2) présentant au moins une première ouverture (68) ménagée dans l'une de deux parois opposées (10, 12) du carter (2) pour supporter le pignon d'entrée (60), une paire d'ouvertures alignées (7, 8) ménagées dans lesdites parois opposées (10, 12) pour supporter l'arbre de sortie (20) et une autre ouverture (4) ménagée dans une autre paroi du carter pour donner accès à une chambre à engrenages (3) de forme allongée à l'intérieur du carter (2), caractérisé en ce que le carter (2) est destiné à être utilisé avec un moyeu démultiplicateur pour entraîner une roue d'un véhicule, l'arbre de sortie étant la fusée. (20) de la roue, ladite première ouverture (68) donne accès à la chambre (3) prévue pour le pignon d'entrée (60), au moins l'un des deux ouvertures alignées (7, 8) donné accès à la chambre (3) destinée à la fusée (20) de la roue (20) et l'autre ouverture (4) donne accès à la chambre (3) prévue pour la roue dentée de sortie (30) pour permettre de l'introduire dans la chambre (3) et de la monter à l'intérieur de la chambre (3) sur la fusée (20) de la roue au moment où la fusée (20) de la roue est introduite dans la chambre à travers ladite au moins une (8) des deux ouvertures alignées (7, 8), une plaque de fermeture (100) est prévue pour l'autre ouverture (4) et des moyens (20) sont prévus pour monter le carter (2) sur un véhicule de telle manière que les forces exercées sur la fusée (20) de la roue soient transmises au véhicule par l'intermédiaire du carter (2).

**Patentansprüche**

1. Nabe mit Zahnradgetriebe zum Antrieb des Rades eines Fahrzeuges, enthaltend ein Gehäuse (2) mit einer länglichen Zahnradkammer (3), eine Radachse (20), die sich im wesentlichen senkrecht zur Längsrichtung der Zahnradkammer (3) durch diese hindurch erstreckt, ferner enthaltend ein Ausgangs-Zahnrad (30) und ein Eingangs-Zahnrad (60), wobei das Ausgangs-Zahnrad (30) die Radachse (20) antreibt und im Eingriff mit dem Eingangs-Zahnrad (60) steht, dadurch gekennzeichnet, daß das Gehäuse (2) ein einteiliges Gußgehäuse mit einem ersten Zugang (6) zur Aufnahme und Halterung der Radachse (20) ist, daß das Gehäuse (2) einen zweiten Zugang (68) zur Aufnahme einer mit dem Eingangs-Zahnrad (60) verbundenen Eingangswelle (30) und einen dritten Zugang (4) in einer Seitenwand des Gehäuses (2) zum Einführen des Ausgangs-Zahnrades (30) in die Zahnradkammer (3) besitzt, daß der erste (6) und der zweite Zugang (68) in den Stirnwänden (10, 12) der Zahnradkammer vorgesehen sind, wobei die Stirnwände (10, 12) senkrecht zur Radachse (20) verlaufen und sich die genannte Seitenwand zwischen den Stirnwänden (10, 12) befindet, und daß das einteilige Gehäuse (2) Montagemittel (150, 200) zur Befestigung an einem Fahrzeug besitzt.

2. Nabe nach Anspruch 1, dadurch gekennzeichnet, daß die Montagemittel (150, 200) einen Arm (150) zur Beeinflussung der Lage der Nabe relativ zum Fahrzeug und zwei Anschlußflansche (200) umfassen, welche sich an den Enden des Gehäuses (2), einer oberhalb und einer unterhalb der Zahnradkammer (3) erstrecken, daß der erste (6) und der zweite Zugang (68) im wesentlichen zentral zur Zahnradkammer (3) angeordnet sind, und daß der zweite Zugang (68) benachbart zum ersten Zugang (6) angeordnet ist.

3. Nabe nach Anspruch 2, dadurch gekennzeichnet, daß der Arm (150) an dem Gehäuse befestigt und so bemessen ist, daß er ein Ende der Radachse (20) abdeckt, wobei der Arm (150) einen Teil des Lenkungssystems eines Fahrzeuges bildet oder mit dem Fahrzeugrahmen verbindbar ist, um eine Lage der Nabe relativ zum Fahrzeugrahmen beizubehalten.

4. Nabe nach Anspruch 1, 2 oder 3, dadurch gekennzeichnet, daß der dritte Zugang (4) durch eine im wesentliche rechteckige Öffnung gebildet ist.

5. Nabe nach Anspruch 1, 2, 3 oder 4, dadurch gekennzeichnet, daß der erste Zugang (6) zwei kreisförmige fluchtende Öffnungen (7, 8) zur Aufnahme von Radachslager (24, 26) an jedem Ende des einteiligen Gehäuses umfaßt.

6. Nabe nach Anspruch 1, 2, 3, 4 oder 5, dadurch gekennzeichnet, daß der zweite Zugang (68) zwei Öffnungen (68, 310) umfaßt, von denen die eine Öffnung (68) die Eingangswelle (300) aufnimmt, und von denen die zweite Öffnung (310) einen Zugang zu einem Teil zur Sicherung der Eingangswelle (300) innerhalb des Eingangs-Zahnrades (60) bildet.

7. Nabe nach einem der vorhergehenden Ansprüche, dadurch gekennzeichnet, daß die Radachse (20) mit dem Ausgangs-Zahnrad (30) in dessen Zentrum kerbverzahnt ist und durch Lager (24, 26) an jeder Seite der Zahnradkammer (3) gehalten ist, daß die Radachse (20) an einem Ende Mittel (50, 52) umfaßt, um das Achsialspiel einzustellen, und daß das Ausgangs-Zahnrad (30) mindestens teilweise durch einen mit der Radachse (20) verbundenen Schnappring (40) auf der Radachse lokalisiert ist.

8. Nabe nach einem der vorhergehenden Ansprüche, dadurch gekennzeichnet daß das Eingangs-Zahnrad (60) kerbverzahnt ist, um die Eingangswelle (300) aufzunehmen, daß der zweite Zugang (68) eine im wesentlichen mit dem Eingangs-Zahnrad (60) ausgefluchtete Zugangsmündung umfaßt, um die Eingangswelle (300) an dem Eingangs-Zahnrad benachbart zum Ende der in dem Eingangs-Zahnrad aufgenommenen Eingangswelle (300) zu sichern, und daß das Eingangs-Zahnrad (60) und das Ausgangs-Zahnrad (30) eine ungefähre 2:1 — Übersetzung bewirken.

9. Nabe nach einem der vorhergehenden Ansprüche, gekennzeichnet durch einen Ölsumpf (350) am Boden der Zahnradkammer (3) unterhalb aller Zugänge (4, 6, 68).

10. Nabe nach einem der vorhergehenden Ansprüche 4—9, gekennzeichnet durch eine flache Abdeckplatte (100) zum Verschließen der rechteckigen Öffnung (4) in dem Gehäuse (2), und gekennzeichnet dadurch, daß die Radachse (20) und das eingangs-Zahnrad (60) gelagert in den Außenwänden (10, 12) des Gehäuses getragen werden.

11. Einteiliges Gehäuse (2) für ein Getriebe mit einem Eingangs-Zahnrad (60) und einer parallelen Ausgangswelle (20), welche ein Ausgangs-Zahnrad (30) trägt, um einen Antrieb vom Eingangs-Zahnrad (60) auf die Ausgangswelle (20) zu übertragen, wobei das Gehäuse mindestens eine erste Öffnung (68) in einer von zwei gegenüberliegenden Wänden (10, 12) des Gehäuses (2) besitzt, um das Eingangs-Zahnrad (60) zu tragen, wobei das Gehäuse (2) ferner ein Paar miteinander fluchtender Öffnungen (7, 8) in den gegenüberliegenden Wänden (10, 12) aufweist, um die Ausgangswelle (20) zu tragen, und wobei das Gehäuse (2) eine weitere Öffnung (4) in einer anderen Wand des Gehäuses besitzt, um einen Zugang zu einer länglichen Zahnradkammer (3) innerhalb des Gehäuses zu schaffen, dadurch gekennzeichnet, daß das Gehäuse (2) für eine Nabe mit Zahnradgetriebe zum Antrieb des Rades eines Fahrzeuges vorgesehen ist, daß die Ausgangswelle die Radachse (20) ist, daß die erste Öffnung (68) einen Zugang zur Zahnradkammer (3) für das Eingangs-Zahnrad (60) bildet, daß wenigstens eine der beiden fluchtenden Öffnungen (7, 8) einen Zugang zur Zahnradkammer (3) für die Radachse (20) ermöglicht und die weitere Öffnung (4) einen Zugang zur Zahnradkammer (3) für das Ausgangs-Zahnrad schafft, so daß dieses in die Zahnradkammer (3) eingeführt und innerhalb der Zahnradkammer (3) auf der Radachse (20) montiert werden kann, da die Zahnradkammer (3) für die Radachse (20) durch die wenigstens eine (8) der beiden fluchtenden Öffnungen (7, 8) zugänglich ist, daß eine Abdeckplatte (100) für die weitere Öffnung (4) vorhanden ist, und daß Mittel (200) vorgesehen sind, um das Gehäuse (2) an einem Fahrzeug zu befestigen, wobei die auf die Radachse (20) ausgeübten Kräfte durch das Gehäuse (2) auf das Fahrzeug übertragen werden.

FIG.1.

FIG. 2.

200

2

4

8

22

20

100

150a

150

FIG. 3.

FIG. 4.